# EUROPÄISCHE PATENTSCHRIFT

(11) **EP 0 620 779 B1**
(45) Veröffentlichungstag und Bekanntmachung des Hinweises auf die Patenterteilung: **01.04.1998**
(21) Anmeldenummer: 93915616.2
(22) Anmeldetag: 23.07.1993
(51) Int. Cl.: B29C 47/64, B29B 7/48

(54) **RETRUDER**
RETRUDER
EXTRUDEUSE INVERSE

(30) Priorität: 23.07.1992 CH 2321/92
(43) Veröffentlichungstag der Anmeldung: 26.10.1994
(73) Patentinhaber: ANTOGI AG, 9493 Mauren (LI)
(72) Erfinder: ZIMMERMANN, Anton, CH-4583 Mühledorf (CH)
(74) Vertreter: Arato, Laszlo
(86) Internationale Anmeldenummer: CH9300186
(87) Internationale Veröffentlichungsnummer: WO9402303

(56) Entgegenhaltungen:
- EP-A- 0 165 093
- EP-A- 0 343 280
- DE-A- 2 038 327
- DE-A- 2 117 997
- FR-A- 1 456 812
- US-A- 2 765 490
- US-A- 3 577 588
- US-A- 3 742 093
- US-A- 3 874 090

## Beschreibung

Die Erfindung betrifft einen Retruder zum kontinuierlichen Fördern, Mischen und/oder Kneten von Medien unter erhöhtem Druck, gemäss den kennzeichnenden Merkmalen des Anspruchs 1. Für Vorrichtungen ähnlicher Art hat sich die Bezeichnung Extruder eingebürgert. Da diese Kennzeichnung für die vorliegende Erfindung, wegen der Schubumkehr (Umkehr der Förderrichtung), grundsätzlich falsch ist, wird anstelle einer Umschreibung der Kürzel Retruder aus Re-(vers)= Umkehr und (Ex)- truder verwendet.

Das kontinuierliche Fördern, Mischen und/oder Kneten von Medien gehört zu den Grundoperationen der Verfahrenstechnik. Beim Misch- und/oder Fördergut kann es sich um sehr verschiedene Substanzen handeln. Entsprechend verschieden können die chemischen und physikalischen Eigenschaften dieser Stoffe, ihr Aggregatzustand und ihr Verhalten auf Druck und Temperatur sein. Dieser Vielfalt entsprechend sind die Lösungen des Maschinenbaus mit Stand der Technik, die von Knetern von Schokoladenmasse, der Herstellung von Kunststoffhalbzeug mit Extrusion und der Verarbeitung von rieselfähigem Kunststoffgranulat mit Glasfaseranteil zum Spritzguss bis zur Entsorgung von biologisch aktiven Abfällen reichen. Für all diese Aufgaben sind Maschinen mit, je nach den Bedürfnissen, gekühlten oder erwärmten Gehäusen und mit mindestens zwei sich drehenden, sich kämmenden Förderschnecken bekannt, die einen Druckaufbau durch die Zwangsförderung des Mediums in den einzelnen, abgeschlossenen Windungen des Schneckenkanals, ohne Rückwirkung auf den Massentransport erzeugen. Die Dichtungen und die Lager sind die Schwachstellen dieser Konstruktionen, denn der Förderdruck erzeugt hohe Axialdrücke.

Aus DE-A-2 117 997 ist ein Extruder mit der Aufgabe der Reduzierung des auf die Extruderschnecken ausgeübten Rückdrucks bekannt. Er ist so gestaltet, dass die miteinander kämmenden Schneckenabschnitte mit Gegensteigung gebildet sind. Die Schneckenstege sind unstetig und weisen Durchbrechungen in Form von radialen Nuten auf, so dass der Schneckenabschnitt als Drosselzone zur Entgasung des Fördergutes dient. Für hohe Drücke im Medium, zwecks Steigerung der Reibkräfte im Medium selbst, reichen solche Massnahmen zur Reduktion des Rückdruckes nicht aus. Insbesondere zur Behandlung abrasiver Medien im Reib-Reaktor, der als thermo-mechanische Verfahrenseinheit zum Aufbereiten von Biomasse dient, sind sehr hohe Betriebsdrücke erforderlich.

Die vorliegende Erfindung stellt sich die Aufgabe, den Druckaufbau und die mediuminternen Reibkräfte einer Maschine, mit mindestens zwei sich drehenden, sich kämmenden Förderschnecken, bei der Zwangsförderung des Mediums im Schneckenkanal, ohne nachteilige Folgen auf die Lagerdichtungen und die Lager zu ermöglichen und zu steigern.

Erfindungsgemäss wird diese Aufgabe durch die kennzeichnenden Merkmale des Anspruchs 1 gelöst.

Die durch die Erfindung erreichten Vorteile liegen im wesentlichen in der Steigerung der Knetleistung, der Lebensdauer und der Verfügbarkeit von Zwangsförderern für bestehende Aufgaben und bieten darüber hinaus die Möglichkeit der Schaffung neuer Verfahren dank der Schubumkehr und der Steigerung des dem Stand der Technik entsprechenden, zulässigen Förderdrucks.

Anhand der beiliegenden schematischen Zeichnungen wird die Erfindung beispielsweise erläutert. Es zeigen:

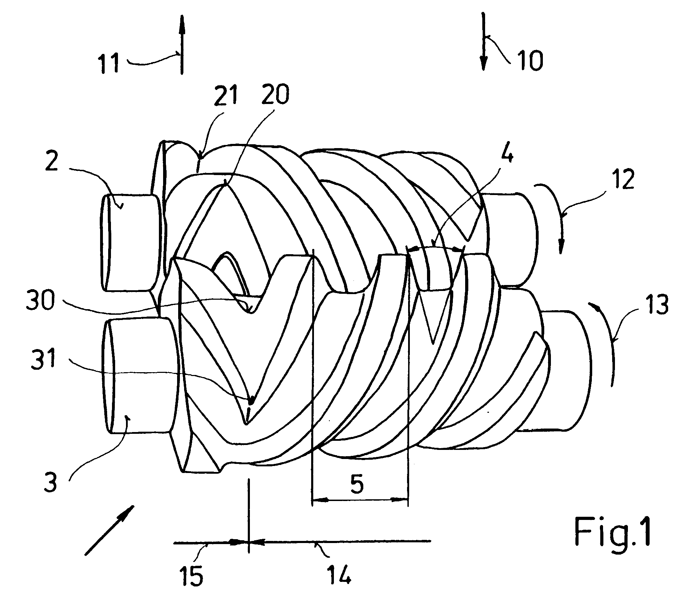

- Fig. 1: die perspektivische Darstellung der Schnecken eines Retruders.

Der Retruder 1 in Figur 1 ist ohne Gehäuse dargestellt und zeigt lediglich die zwei sich kämmenden Umkehrschnecken 2,3. Die Bezeichnung "Umkehrschnecke" weist auf die besondere Eigenschaft dieser Schnecken, denn beide Umkehrschnecken wechseln ihre Förderrichtung 14 in die Umkehrrichtung 15 indem die Steigungswinkel, die eine Funktion der Steigung 5 und der Umfang eine der beiden Umkehrschnecken 2,3 ist, im Bereich der Wendepunkte 20, 21 und/oder 30,31 invertieren. Die Absolutwerte der Steigung im Bereich der Förderrichtung 14 und der Steigung der Umkehrichtung 15 können je nach Bedarf verschieden sein. Eine weitere wichtige Eigenschaft der zwei Umkehrschnecken 2,3 ist, dass sie sich gegenläufig 12,13 und kämmend drehen. Im Bereich der Umkehrpunkte 20,30 und 21,31 der Umkehrschnecken 2,3 vollzieht sich das Kämmen so, dass die wendenden Windungen der Umkehrschnecken 2,3 wie pfeilverzahnte Zahnräder sich abwalzen.
Die Tiefe des Schneckenkanals (der Unterschied des Aussen- und des Kernradius der Umkehrschnecken 2,3) und der Flankelwinkel 4 bilden den Querschnitt des Schneckenkanals in Funktion des Steigungswinkels. Der Querschnitt des Schneckenkanals, kann mit dem Flankenwinkel 4 in der Förderrichtung 14 ab nehmen und die zunehmende Verdichtung des Mediums verursachen.
Von der Beschickung 10 gelangt das Medium in den Schneckenkanal der Umkehrschnecken 2,3 und wird durch die gegenläufige Drehung zwangsweise in den einzelnen, von der Windungen des Schneckenkanals, der Gehäuseinnenwand und der kämmenden Schnecke abgeschlossenen Gängen bis zu den Wendepunkten 20,30 und 21,31 entsprechend der Förderrichtung 14 gefördert. Gegen diesen Massenstrom drückt sich ab der Rotationsebene, der gemeinsamen Wendepunkte 20,30 und 21,31, der in Umkehrrichtung 15 geförderte Massentransport. Entsprechend dem Gegendruck von der Umkehrrichtung wird die Reibungskraft im Medium erhöht und die Axialbelastung der Schneckenlager reduziert. Die progressiv abnehmenden Flankenwinkel der Umkehrrichtung 15 lassen den Massentransport des Mediums zu der Entnahme 11 vorrücken. Wegen des Gegendrucks in Umkehrrichtung 15 wird der Druck auf die Dichtungen des benachbarten Lagers erheblich reduziert, so dass die Gefahr der Schädigung der Lager entsprechend vermindert wird.
Der Massenfluss des Retruders 1 lässt die zu den Umkehrschnecken 2,3 senkrechte Beschickung 10 und Entnahme 11 zu. Die Beschickung 10 und die Entnahme 11 können, je nach Wunsch des Anwenders, wie in der Figur 1 dargestellt gegensinnig, oder aber wie nicht dargestellt, gleichsinnig sein. Je nach Bedarf kann das Gehäuse des Retruders 1 mit einer gemeinsamen und/oder beliebig unterteilten Ummantelung versehen sein, die die Erwärmung und/oder die Kühlung des Retruders gestattet. Schliesslich soll auf die Möglichkeit der Gestaltung der Umkehrschnecken als Monoblock hingewiesen werden. Dank dieser Robustheit der Konstruktion des Retruders wird die Vernunft die Leistungsgrenzen setzen.

## Patentansprüche

1. Retruder zum kontinuierlichen Mischen und Kneten von Medien unter erhöhtem Druck, bestehend aus einem Antrieb und mindestens einem Gehäuse, sowie mindestens zwei gegenläufigen (12, 13), sich kämmende Umkehrschnecken (2, 3), die das Medium in der Förderrichtung (14) und in der Umkehrrichtung (15) so bewegen, dass das Medium von der Beschickung (10) bis zur Entnahme (11) vom Gehäuse, die senkrecht zur Förderrichtung (14) gerichtet ist, gefördert wird.

2. Retruder nach Anspruch 1 dadurch gekennzeichnet, dass die Flankensteigung (4) der Umkehrschnecken (2, 3) je nach der Förderrichtung (14, 15) progressiv abnehmend ist.

3. Retruder nach den Ansprüchen 1 und 2 dadurch gekennzeichnet, dass die Umkehrschnecken (2, 3) aus einem Stück als Monoblock gefertigt sind.

4. Retruder nach den Ansprüchen 1 bis 3 dadurch gekennzeichnet, dass die Steigung (5) der Umkehrschnecken (2, 3) in der Förderrichtung (14) und in der Umkehrrichtung (15) verschieden sind.

5. Retruder nach den Ansprüchen 1 bis 4 dadurch gekennzeichnet, dass die Umkehrschnecken (2, 3) im Gehäuse (6) einseitig gelagert sind.

6. Retruder nach den Ansprüchen 1 bis 5 dadurch gekennzeichnet, dass die Umkehrschnecken (2, 3) im Gehäuse (6) beidseitig gelagert sind.

7. Retruder nach den Ansprüchen 1 bis 6 dadurch gekennzeichnet, dass sich die Breite des Schneckenkanals der Umkehrschnecken (2, 3) in der jeweiligen Förderrichtung abnehmend verengt.

8. Retruder nach den Ansprüchen 1 bis 7 dadurch gekennzeichnet, dass das Gehäuse (6) mindestens einen Kühlmantel aufweist.

9. Retruder nach den Ansprüchen 1 bis 8 dadurch gekennzeichnet, dass das Gehäuse (6) mindestens einen Heizmantel aufweist

10. Retruder nach den Ansprüchen 1 bis 9 dadurch gekennzeichnet, dass der Antrieb der gegenläufigen Umkehrschnecken (2, 3) stufenlos regelbar ist.

## Claims

1. Retruder for the continuous mixing and kneading of media under increased pressure, comprising a drive and at least one casing, and at least two counterrotating (12, 13), intermeshing reversing screws (2, 3) which move the medium in the conveying direction (14) and in the reverse direction (15) such that the medium is transported from the loading point (10) to the discharge point (11) of the casing, which is disposed vertically to the conveying direction 14).

2. Retruder according to claim 1, characterised by the fact that the flank pitch (4) of the reversing screws (2, 3) is progressively degressive according to the conveying direction (14, 15).

3. Retruder according to claims 1 and 2, characterised by the fact that the reversing screws (2, 3) are of one piece, monobloc construction.

4. Retruder according to claims 1 to 3, characterised by the fact that the pitch (5) of the reversing screws (2, 3) is different in the conveying direction (14) and in the reversing direction (15).

5. Retruder according to claims 1 to 4, characterised by the fact that the raversing screws (2, 3) are supported in bearings on only one side in the casing (6).

6. Retruder according to claims 1 to 5, characterised by the fact that the reversing screws (2, 3) are supported in bearings on both sides in the casing (6).

7. Retruder according to claims 1 to 6, characterised by the fact that the width of the screw channel of the reversing screws (2, 3) narrows progressively in the conveying direction.

8. Retruder according to claims 1 to 7 characterised by the fact that least one cooling jacket.

9. Retruder according to claims 1 to 8 characterised by the fact that the casing (6) has at least one heating jacket.

10. Retruder according to claims 1 to 9, characterised by the fact that the drive of the counter-rotating reversing screws (2, 3) is steplessly variable.

## Revendications

1. Extrudeuse inverse pour mélanger et malaxer de manière continue des fluides sous pression élevée, comprenant un entraînement et au moins un carter, de même qu'au moins deux vis sans fin (2, 3,) réversibles se peignant en sens opposé (12, 13) qui déplacent le fluide dans le sens du transport (14) et dans le sens inverse (15) de manière à ce que le fluide soit transporté depuis le chargement (10) jusqu'au prélèvement (11) perpendiculaire au sens du transport (14) à partir du carter.

2. Extrudeuse inverse caractérisée d'après la revendication 1 par le fait que la pente du flanc (4) des vis sans fin réversibles (2, 3,) diminue progressivement suivant le sens du transport (14, 15,)

3. Extrudeuse inverse caractérisée d'après les revendications 1 et 2 par le fait que les vis sans fin réversibles sont fabriquées d'une seule pièce sous forme de monobloc.

4. Extrudeuse inverse caractérisée d'après les revendications 1 à 3 par le fait que la pente (5) des vis sans fin réversibles (2, 3) est différente dans le sens du transport et dans celui inverse(15).

5. Extrudeuse inverse caractérisée d'après les revendications 1 à 4 par le fait que les vis sans fin réversibles (2, 3) reposent sur un palier unilatéral dans le carter (6).

6. Extrudeuse inverse caractérisée d'après les revendications 1 à 5 par le fait que les vis sans fin réversibles (2, 3) reposent des deux côtés sur un palier dans le carter (6).

7. Extrudeuse inverse caractérisée d'après les revendications 1 à 6 par le fait que la largeur du canal des vis sans fin réversibles (2, 3) se rétrécit dans le sens de transport respectif.

8. Extrudeuse inverse caractérisée d'après les revendications 1 à 7 par le fait que le carter (6) possède au moins une chemise réfrigérante.

9. Extrudeuse inverse caractérisée d'après les revendications 1 à 8 par le fait que le carter possède au moins une chemise de réchauffage.

10. Extrudeuse inverse caractérisée d'après les revendications 1 à 9 par le fait que l'entraînement des vis sans fin réversibles (2, 3) tournant en sens opposé est réglable en continu.
